# EUROPÄISCHE PATENTSCHRIFT

(11) **EP 1 222 512 B1**
(45) Veröffentlichungstag und Bekanntmachung des Hinweises auf die Patenterteilung: **12.04.2017**
(21) Anmeldenummer: 00982951.6
(22) Anmeldetag: 05.10.2000
(51) Int. Cl.: G06F 1/00

(54) **SICHERUNGSMODUL UND VERFAHREN ZUR ERSTELLUNG FÄLSCHUNGSSICHERER DOKUMENTE**
SECURITY MODULE AND METHOD FOR PRODUCTION OF FORGE-PROOF DOCUMENTS
MODULE DE SÉCURISATION ET PROCÉDÉ DE CRÉATION DE DOCUMENTS INFALSIFIABLES

(30) Priorität: 07.10.1999 DE 19948319; 27.04.2000 DE 10020561
(43) Veröffentlichungstag der Anmeldung: 17.07.2002
(73) Patentinhaber: Deutsche Post AG, 53113 Bonn (DE)
(72) Erfinder: LANG, Jürgen, 51429 Bergisch Gladbach (DE); MEYER, Bernd, 53639 Königswinter (DE)
(74) Vertreter: Jostarndt Patentanwalts-AG
(86) Internationale Anmeldenummer: PCT/DE2000/003506
(87) Internationale Veröffentlichungsnummer: WO 2001/025879

(56) Entgegenhaltungen:
- EP-A- 0 331 352
- AKL S G ET AL: "DIGITAL SIGNATURES: A TUTORIAL SURVEY" COMPUTER, IEEE COMPUTER SOCIETY, LONG BEACH., CA, US, US, Bd. 16, Nr. 2, Februar 1983 (1983-02), Seiten 15-24, XP000946230 ISSN: 0018-9162
- HUHNLEIN D ; MERKLE J: "Secure and cost efficient electronic stamps" SECURE NETWORKING - CQRE SECURE'99, PROCEEDINGS (LECTURE NOTES IN COMPUTER SCIENCE VOL.1740), [Online] 30. November 1999 (1999-11-30) - 2. Dezember 1999 (1999-12-02), Seiten 94-100, XP002185463 Dusseldorf, Germany ISBN: 3-540-66800-4 Gefunden im Internet: <URL:http://citeseer.nj.nec.com/cs> [gefunden am 2001-12-12]
- "Information Based Indicia Program Postal Security Device Specification" INFORMATION BASED INDICIA PROGRAM. POSTAL SECURITY DEVICE SPECIFICATION, XX, XX, 13. Juni 1996 (1996-06-13), Seiten 1-41, XP002137734

## Beschreibung

### Sicherungsmodul und Verfahren zur Erstellung fälschungssicherer Dokumente

Die Erfindung betrifft ein Sicherungsmodul.

Die Erfindung betrifft ferner ein Verfahren zur Erstellung fälschungssicherer Dokumente, wobei Eingangsdaten in einen Dateneingang eines Sicherungsmoduls eingegeben werden.

Aus der EP 331 352 ist ein Frankierverfahren und eine Vorrichtung zum Frankieren bekannt. Bei dem Frankierverfahren wird ein maschinenlesbarer Datenblock generiert. In den Datenblock gehen der Wert der Freimachung und eine pseudo-zufällige Zahl ein, die für jeden Frankiervorgang wechselt. Der Datenblock wird verschlüsselt bevor er gedruckt wird. Während des Druckvorganges wird mittels einer Leseeinrichtung der gedruckte Datenblock entschlüsselt und überprüft, dass der beabsichtigte Druck korrekt ist. Ist der Druck nicht korrekt, so wird der Frankiervorgang abgebrochen.

Die Lizenznummer der Frankiermaschine und die Ortskennungen der Aufgabe der Sendung und der Zielbestimmung werden mit dem Datenblock nach der Verschlüsselung kombiniert.

Die Daten werden an der Poststation mit dem zur Lizenznummer zugeordneten Schlüssel entschlüsselt und eine Gültigkeitsprüfung durchgeführt.

Aus dem Fachbuch "Handbock of Applied Cryptography"; erschienen im Oktober 1996 mit ISBN-Nummer: 0-8493-8523-7 ist die Verwendung Hash-Funktionen in der Kryptographie bekannt. Insbesondere werden Hash-Funktionen bei der digitalen Signatur eingesetzt.

Es gibt unterschiedliche Klassen von Hash-Funktionen. Mit MAC, message authentification codes, werden Hash-Funktionen bezeichnet, die einen geheimen Schlüssel einbeziehen und damit Ursprungsauthentifizierung und Datenintegrität bereitstellen. MDCs, modification detection codes, sind eine Unterklasse der unverschlüsselten Hash-Funktionen. Weiterhin ist die Verwendung von zufälligen und pseudo-zufällige Nummern und Zeitstempeln in diesem Buch beschrieben.

Der Erfindung liegt die Aufgabe zugrunde, ein Sicherungsmoduls zu schaffen, mit dem fälschungssichere Dokumente erzeugt werden können.

Erfindungsgemäß wird diese Aufgabe dadurch gelöst, dass ein Sicherungsmodul so gestaltet wird, dass es einen Dateneingang enthält, durch den Informationen in das Sicherungsmodul eingegeben werden können, dass das Sicherungsmodul wenigstens zwei Datenausgänge enthält, wobei durch einen ersten Datenausgang Daten ausgegeben werden können, die an eine Bescheinigungsstelle übertragen werden und wobei durch einen zweiten Datenausgang Daten ausgegeben werden, die auf ein auszugebendes Dokument übertragen werden können, dass das Sicherungsmodul wenigstens zwei Kombinationsmaschinen enthält, wobei eine erste der Kombinationsmaschinen einen Ergebniswert für den ersten Datenausgang erzeugt und wobei eine zweite Kombinationsmaschine einen Ergebniswert für den zweiten Datenausgang erzeugt.

Zur Erhöhung der Datensicherheit ist es zweckmäßig, dass das Sicherungsmodul so gestaltet wird, dass es einen Geheimnisgenerator enthält, der ein nicht vorhersehbares Geheimnis erzeugt.

Hierbei ist es besonders vorteilhaft, dass der Geheimnisgenerator mit der ersten Kombinationsmaschine und/oder der zweiten Kombinationsmaschine so verbunden ist, dass ein von dem Geheimnisgenerator erzeugtes Geheimnis in die erste Kombinätionsmaschine und/oder die zweite Kombinationsmaschine eingeht.

Für eine Anwendung des Sicherungsmoduls in Systemen, in denen eine Abrechnung, insbesondere eine Abrechnung von Leistungen, erfolgt, ist es besonders zweckmäßig, dass das Sicherungsmodul so gestaltet ist, dass es ein Identifikatiorisregister enthält, wobei ein Ausgangswert des Identifikationsregisters so mit der ersten Kombinationsmaschine verbunden ist, dass in eine von der ersten Kombinationsmaschine ausgegebene Datenkombination ein Wert des Identifikationsregisters eingeht.

Eine weitere Erhöhung der Datensicherheit lässt sich vorteilhafterweise dadurch erzielen, dass das Sicherungsmoduls wenigstens eine Verschlüsselungsmaschine enthält, welche einen Ausgangswert einer der Kombinationsmaschinen verschlüsselt.

Hierbei ist es zweckmäßig, dass die Verschlüsselungsmaschine mit einem Schlüsselregister verbunden ist, wobei wenigstens ein in dem Schlüsselregister enthaltener Wert in der Verschlüsselungsmaschine zur Verschlüsselung eingesetzt werden kann.

Eine zweckmäßige Implementation des Sicherungsmoduls zeichnet sich dadurch aus, dass es eine Hash-Maschine enthält.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Zeichnung.

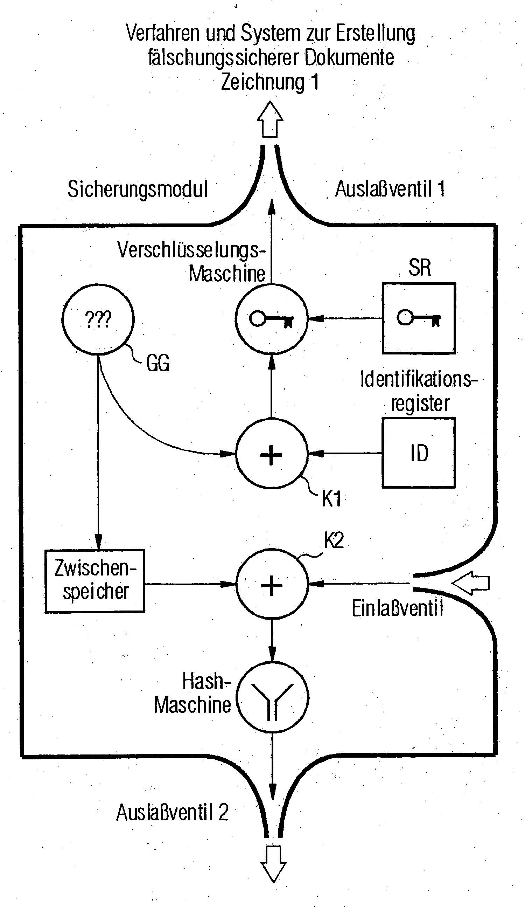

Die Zeichnung, Fig. 1, zeigt eine Prinzipdarstellung eines für die Erstellung fälschungssicherer Dokumente geeigneten Sicherungsmoduls.

Das in Fig. 1 dargestellte Si-cherungsmodül weist einen Dateneingang auf, durch den Informationen in das Sicherungsmodul eingegeben werden können.

Das Sicherungsmodul weist ferner zwei Datenausgänge DA1 und DA2 auf.

Durch den ersten Datenausgang DA1 können Daten ausgegeben werden, die an eine externe Stelle, beispielsweise eine Bescheinigüngsstelle, übertragen werden.

Durch den zweiten Datenausgang DA2 können Daten auf ein auszugebendes Dokument übertragen werden.

Das Sicherungsmodul weist ferner wenigstens zwei Kombinationsmaschinen Kl, K2 auf. Die erste Kombinationsmaschine K1 erzeugt einen Ergebn-iswert für den ersten Datenausgang DA1. Die zweite Kombinationsmaschine K2 erzeugt einen Ergebniswert für den zweiten Datenausgang DA2.

Ferner enthält das Sicherungsmodul wenigstens einen Geheimnisgenerator GG, der ein nicht vorhersehbares Geheimnis erzeugt. Der Geheimnisgenerator ist sowohl mit der ersten Kombinationsmaschine K1 als auch mit der zweiten Kombinationsmaschine K2 verbunden. Die Verbindung zwischen dem Geheimnisgenerator GG und der Kombinationsmaschine K2 erfolgt vorzugsweise über einen Zwischenspeicher.

Der Zwischenspeicher hat vorzugsweise die Funktion, das im Geheimnisgenerator erzeugte Geheimnis temporär zu speichern.

Das Sicherungsmodul enthält ferner ein Identifikationsregister, das so mit der ersten Kombinationsmaschine K1 verbunden ist, dass in eine von der ersten Kombinationsmaschine ausgegebene Datenkombination ein Wert des Identifikationsregisters eingeht.

Eine in dem Sicherungsmodul enthaltene Verschlüsselungsmaschine ist so programmiert, dass sie einen Ausgangswert einer der Kombinationsmaschinen verschlüsselt, im dargestellten Fall der Kombinationsmaschine K1.

Um Speicherplatz zu sparen, ist es zweckmäßig, ein asymmetrisches Schlüsselpaar nach einem geeigneten Sicherheitsstandard wie beispielsweise RSA zur Verschlüsselung und Signatur einzusetzen. Da keine beliebigen, vom Benutzer vorgegebenen Texte in die Verschlüsselung, Signatur und Hashwertbildung einfließen können, ist dieser Schritt zu rechtfertigen.

Die Schlüssellänge beträgt vorzugsweise wenigstens 128 bit, zweckmäßigerweise deutlich mehr, beispielsweise mindestens 1024 bit, RSA.

Die Erzeugung des Hash-Wertes erfolgt vorzugsweise nach dem Standard SHA-1. Die Hash-Maschine verknüpft eingebrachte Daten irreversibel mit einem Geheimnis. Hierdurch entsteht bei wiederholter Verknüpfung derselben Daten in derselben Weise ein identisches Ergebnis, ohne dass Rückschlüsse auf das Geheimnis möglich sind. Vorzugsweise ist das Geheimnis temporär, da hierdurch die Sicherheit gesteigert wird. Dies ist jedoch nicht notwendig. Beispielsweise kann das Geheimnis fest in einem Datenspeicher eingegeben sein.

Nachfolgend wird die Funktionsweise des Sicherungsmoduls an dem besonders bevorzugten Beispiel der Freimachung von Briefsendungen erläutert.

Das Sicherungsmodul eignet sich jedoch gleichermaßen für andere Verschlüsselungszwecke. Eine Verwendung des Sicherungsmoduls zur Erzeugung fälschungssicherer Dokumente ist besonders zweckmäßig. Der Begriff fälschungssichere , Dokumente ist in keiner Weise einschränkend zu verstehen. Neben den beispielhaft dargestellten Freimachungsvermerken kann es sich bei den fälschungssicheren Dokumenten auch um Fahrkarten oder Eintrittskarten handeln. Durch die Möglichkeit, jede einzelne Dokumentenerzeugung auf der Grundlage von individuellen Daten durchzuführen, können auch einmalige Dokumente wie persönliche Ausweise, Platzkarten oder Listen mit personifizierten Werten erzeugt werden.

Das Sicherungsmodul bearbeitet vorzugsweise individualisierbare Informationen, beispielsweise Zertifikate und digital signierte Lizenzen.

Bei einem bevorzugten Beispiel eines Einsatzes für die Freimachung von Briefen im Bereich der Deutschen Post AG geschieht dies wie folgt:
Eine digitale Signatur ist ein mit einem privaten Signaturschlüssel erzeugtes Siegel zu digitalen Daten, das mit Hilfe eines zugehörigen öffentlichen Schlüssels, der mit einem Signaturschlüssel-Zertifikat versehen ist, den Inhaber des Signaturschlüssels und die Unverfälschtheit der Daten erkennen lässt (vgl. SigG §2, Abs. 1). Unter Benutzung der hier verwandten Terminologie ist eine Prüfstelle in der Lage, die digitale Signatur eines Dokumentherstellers und somit sowohl dessen Identität als auch die Unverfälschtheit der im Dokument enthaltenen Daten zu prüfen, wenn ihr der öffentliche Signaturschlüssel des Dokumentherstellers, der mit einem Signaturschlüssel-Zertifikat versehen ist, zur Verfügung steht.

Jedes hergestellte Sicherungsmodul wird von dem Kundensystemhersteller "digital lizenziert". Die Bescheinigungsstelle erstellt zur Kommunikation mit den Sicherungsmodulen eine eigene signierte Kommunikationslizenz im gleichen Format.

Die Zertifizierung und signierte Lizenzierung erfolgen vorzugsweise wie folgt:
Das Sicherungsmodul erzeugt intern ein Schlüsselpaar, dessen öffentlicher Schlüssel P_{SB} (Public Key) unter Benutzung des privaten Signaturschlüssels des Kundensystemanbieters Sᵣ (Issuer) digital lizenziert wird. Der öffentliche Schlüssel des Kundensystemanbieters Pᵣ ist ebenso wie der öffentliche Schlüssel der Bescheinigungsstelle von der Zertifizierungsstelle (CA)• erstellt und zertifiziert und steht dort zur Prüfung zur Verfügung.

Insgesamt werden im System folgende Schlüssel, Zertifikate und signierte Lizenzen verwendet.

In dem Sicherungsmodul stehen ein privater Schlüssel des Sicherungsmoduls, ein öffentlicher Schlüssel des Sicherungsmoduls und eine durch den Kundensystemanbieter (Issuer) signierte Lizenz des öffentlichen Schlüssels des Sicherungsmoduls.

In der Bescheinigungsstelle stehen vorzugsweise mindestens ein privater Schlüssel der Bescheinigungsstelle und ein öffentlicher Schlüssel der Bescheinigungsstelle zur Verfügung.

Das Sicherungsmodul prüft die Gültigkeit der signierten Lizenz, beispielsweise-durch Kontaktierung einer Zertifizierungsstelle.

Die Bescheinigungsstelle prüft die Gültigkeit der signierten Lizenz eines Sicherungsmoduls - und somit die Identität des Kundensystemanbieters (Issuer) über die Identität der per Attributeintrag im Zertifikat für den Kundensystemanbieter verantwortlichen natürlichen Person - durch Kontaktierung der Zertifizierungsstelle.

Der Herausgeber der Signaturkarten stellt sicher, dass entsprechende Attribute (z.B. Prokura zur Ausgabe von Lizenzen für Sicherungsmodule) ausschließlich in Abstimmung mit der Stelle, bei der die fälschungssicheren Dokumente eingereicht werden, vergeben werden.

Ein regulärer Austausch des Schlüsselpaares des Sicherungsmoduls ist nicht notwendig, jedoch möglich. Die vorgesehene Gültigkeitsdauer der Schlüssel ist möglichst lang, um die Benutzerfreundlichkeit zu erhöhen. Die Gültigkeitsdauer der Schlüssel des Sicherungsmoduls beträgt vorzugsweise mehrere Monate bis Jahre, wobei Werte zwischen drei Monaten und 15 Jahren infrage kommen. Vorzugsweise beträgt die Gültigkeitsdauer zwischen 3 Jahren und 10 Jahren, wobei sich etwa 6 Jahre besonders eignen.

Der Kundensystemhersteller ist berechtigt, die Schlüssel, mit denen er die Lizenzen der ausgegebenen Sicherungsmodule digital lizenziert, jederzeit zu wechseln. Der Kundensystemherste.ller ist verpflichtet, die Signaturschlüssel, mit denen er die Lizenzen der ausgegebenen Sicherungsmodule digital signiert, nach spätestens einem Jahr zu wechseln und hierbei den alten Signaturschlüssel sperren zu lassen. Der Kundensystemhersteller kennzeichnet die Signaturschlüssel in Abstimmung mit der Bescheinigungsstelle.

Eine zur Prüfung der fälschungssicheren Dokumente berechtigte Stelle lehnt Transaktionen bei Feststellung einer Korrumpierung eines Schlüssels ab. Bei einem Einsatz des Sicherungsmoduls zur Herstellung fälschungssicherer Postwertzeichen ist die zur Überprüfung der Dokumente berechtigte Stelle der Postdienstbetreiber, beispielsweise die Deutsche Post AG. In diesem Fall hat eine Korrumpierung eines Schlüssels eines Kundensystemanbieters eine sofortige postseitige Ablehnung jeglicher Transaktionen mit Sicherungsmodulen der Kundensystemhersteller zur Folge, deren signierte Lizenzen mit diesem Schlüssel hergestellt wurden.

Die Verwaltung.der Schlüssel der Zertifizierungsstelle erfolgt entsprechend massgeblicher gesetzlicher und verwaltungsrechtlicher Bestimmungen. In Deutschland sind dies das Signaturgesetz SigG und die Signaturverordnung SigV. Eine weitere Erhöhung der Sicherheit durch Einbeziehung interner Bearbeitungsvorschriften ist möglich.

Die Schlüssel der Bescheinigungsstelle können jederzeit gewechselt werden, ohne dass hierbei Änderungen in den Kundensystemen erforderlich werden.

Nachfolgend wird ein Bescheinigungsverfahren anhand eines Einsatzes von symmetrischen Schlüsseln der Bescheinigungsstelle erläutert.

Symmetrische Schlüssel erlauben eine sehr schnelle Ver- und Entschlüsselung. Ein Einsatz von symmetrischen Schlüsseln setzt voraus, dass der Schlüssel des Senders und der Schlüssel des Empfängers übereinstimmen. Bei einer Kommunikation zwischen der Bescheinigungsstelle und einer Vielzahl von Kundensystemen können symmetrische Schlüssel dann eingesetzt werden, wenn die Bescheinigungsstelle über ausreichende Speicherkapazität für die einzelnen Schlüssel verfügt, die zu den jeweiligen Kundensystemen passen.

Ein Einsatz von asymmetrischen Schlüsseln sieht hingegen vor, dass der Sender die Nachricht mit dem öffentlichen Schlüssel des Empfängers verschlüsselt und dass der Empfänger die Nachricht mit seinem privaten Schlüssel entschlüsselt.

Je nach Einsatzgebiet ist ein Einsatz von symmetrischen oder von asymmetrischen Schlüsseln vorzusehen. Die dargestellten Verfahren können jedoch grundsätzlich sowohl mit symmetrischen als auch mit asymmetrischen Schlüsseln erfolgen.

### Sicherheitsrelevante Aufgaben des Sicherungsmoduls

Das Sicherungsmodul muss zur Initialisierung, zur Kommunikation mit der Bescheinigungsstelle und zur Deaktivierung im Wesentlichen folgende Aufgaben erfüllen:

### Schlüsselerzeugung

Erzeugung und Speicherung eines asymmetrischen Schlüsselpaars innerhalb des Sicherungsmoduls.

### Ausgabe des öffentlichen Schlüssels

Ausgabe des erzeugten öffentlichen Schlüssels im Rahmen der digitalen Signatur der Lizenz durch den Kundensystemänbieter (Issuer). Der private Schlüssel darf das Sicherungsmodul riiemals verlassen.

### Zertifikatspeicherung

Dauerhafte Speicherung des eigenen öffentlichen Schlüssels, beziehungsweise der eigenen signierten Lizenz im Rahmen der Initialisierung.

### Signäturerzeugung

Erzeugung einer digitalen Signatur unter Verwendung des eigenen privaten Signaturschlüssels.

### Signaturprüfung

Prüfung der digitalen Signatur eines Bescheinigungsmoduls der Bescheinigungsstelle unter Verwendung der signierten Lizenz der Bescheinigungsstelle und deren Zertifikat nach einer geeigneten Sicherheitsnorm, beispielsweise dem SigG.

### Zertifikatprüfung

Prüfung eines Zertifikats durch Anfrage bei der Zertifizierungsstelle.

### Temporäre Zertifikatspeicherung

Temporäre Speicherung eines Zertifikats oder einer signierten Lizenz im Rahmen einer Kommunikationssitzung.

### Asymmetrische Verschlüsselung

Verschlüsselung von Daten mit einem verifizierten öffentlichen Schlüssel eines Kommunikationspartners.

### Asymmetrische Entschlüsselung

Entschlüsselung von Daten mit dem eigenen privaten Schlüssel, die mit dem eigenen öffentlichen Schlüssel verschlüsselt wurden.

### Zufallszahlerzeugung

Erzeugung und dauerhafte Speicherung einer nachweisbar qualitativ hochwertigen Zufallszahl in einem Zahlenraum von mindestens 16 byte.

### Speicherung eines Sitzungsschlüssels

Temporäre Speicherung eines Sitzungsschlüssels mit einer Länge von 16 byte.

Speicherung von zwei Identifikationsnummern des Ladevorganges Speicherung der jeweils zwei neuesten Identifikationsnummern mit einer Länge von jeweils 16 byte.

Speicherung des aktuellen Registerwerts der Wertbörse Speicherung der Währung und des Betrags, der aktuell zur Herstellung von Freimachungsvermerken verwendet werden kann; "Descending Register".

### Speicherung des aufsteigenden Registerwerts

Speicherung aller insgesamt mit dem Sicherungsmodul freigemachten Beträge, vorzugsweise in einer einheitlichen Währung, beispielsweise dem Euro; "Ascending Register".

### Benutzeridentifikation

Persönliche Identifikation des für bestimmte Nutzungsmöglichkeiten berechtigten Benutzers des Sicherungsmoduls durch Verwendung einer mit dem eigenen öffentlichen Schlüssel zu verschlüsselnden PIN.

Statusausgabe der Identifikationsnummer des Ladevorganges Ausgabe der Gültigkeit des aktuellen Ladesystems an das Kundensystem ohne die Möglichkeit der Änderung durch das Kundensystem.

### Statusausgabe des Registerwerts der Wertbörse

Ausgabe des aktuellen verfügbaren Börsenwerts an das Kundensystem ohne die Möglichkeit der Änderung durch das Basissystem.

### Hash-Bildurig der sendungsspezifischen Daten

Bildung eines Hash-Wertes, beispielsweise nach SHA-1 von den vom Kundensystem übermittelten sendungsspezifischen Daten und der gespeicherten Zufallszahl.

Verminderung von Registerwerten einer Wertbörse Vorzugsweise arbeitet das Sicherungsmodul mit einer digitalen Wertbörse zusammen. Diese Wertbörse kann in das Sicherungsmodul integriert sein oder separat untergebracht werden. Eine separate Unterbringung erfolgt beispielsweise in einer digitalen Brieftasche (Digital-Wallet). Durch die Speicherung wird sichergestellt, dass nur tatsächlich vorhandene Beträge benutzt werden. Bei der Benutzung, bei der beispielsweise eine Hash-Wert-Bildung erfolgt, wird der Betrag und damit auch der ihm zugeordnete Registerwert verringert.

### Digitale Signatur der sendungsspezifischen Daten

Bildung und Ausgabe der Digitalen Signatur der sendungsspezifischen Daten bei jeder Hash-Bildung der sendungsspezifischen Daten.

### Fehlerprotokollierung

Protokollierung der Aktivität sowie gültiger und ungültiger Kommunikationsversuche mit dem Sicherungsmodul.

### Selbsttest

Durchführung eines Selbsttests bei jeder Aktivierung.

### Deaktivierung

Deaktivierung des Sicherungsmoduls nach Identifikation und Aufforderung durch einen Operator.

### Sicherheitsniveau durch Security Level nach FIPS PUB 140

Ziel des Sicherungsmoduls ist es, innerhalb eines Kundensystems die Vertraulichkeit und Integrität von Informationen, die im Sicherungsmodul gespeichert und verarbeitet werden, zu gewährleisten. Zur Erlangung eines einheitlichen Sicherheitsniveaus bei unterschiedlichen Kundensystemen und unterschiedlichen Sicherungsmodulen ist die Übereinstimmung mit und Zertifizierung nach einer vorher festgelegten Sicherheitsstufe, beispielsweise entsprechend einer durch FIPS PUB 140 vorgegebenen Sicherheitsstufe (FIPS PUB 140:"Security Level"), zweckmäßig.

Die Anwendung von FIPS PUB 140, Security Level 4, ist besonders vorteilhaft.

Die zur Durchführung empfohlene Sicherheitsstufe ist FIPS PUB 140, Security Level 3, weil hierdurch eine hohe Datensicherheit mit einem geringen Handhabungsaufwand verbunden werden.

Es ist besonders zweckmäßig, dass das System über FIPS PUB 140-1 hinausgehende Anforderungen erfüllt.

Zu einer weiteren Erhöhung der Datensicherheit ist es zweckmäßig, die sicherheitsrelevanten Prozesse des Kundensystems wie folgt durchzuführen:
Die Herstellung und Initialisierung des Sicherungsmoduls erfolgt in einer abgeschirmten Umgebung nach einem mit der Deutschen Post abgestimmten Sicherheitsstandard. Das Risiko der Korrumpierung des zum Einsatz kommenden Signaturschlüssels zur Erzeugung der signierten Lizenzen der hergestellten Sicherheitsmodule wird durch Überprüfungen minimiert. Bei der Herstellung werden ein Schlüsselpaar erzeugt, ein öffentlicher Schlüssel zur Erzeugung der signierten Lizenz durch den Kundensystemanbieter ausgegeben, eine signierte Lizenz des Sicherheitsmoduls (inklusive Sicherheitsmodul-ID) im Sicherheitsmodul gespeichert und
der Attributeintrag in einem eingesetzten Zertifikat gespeichert.

### Aktivierung des Sicherungsmoduls durch das Kundensystem

Um vom Kundensystem aus das Sicherungsmodul zu aktivieren, wird dieses aufgefordert, seine signierte Lizenz (inklusive seines öffentlichen Schlüssels P_{SB}) sowie eine Zufallszahl Xₐᵤₜₕ mit einer Länge von 16 byte an das Kundensystem zu übergeben. (Die Zufallszahl dient insbesondere dann zur Absicherung von Replay-Attacken, wenn zwischen Tastatur des Kundensystems und Sicherungsmodul ein ungesicherter Übertragungswert liegt, etwa bei Internet Lösungen mit zentralem Sicherungsmodul-Server im Internet und dezentralen PCs als Eingabeterminals für Login-Informationen wie zum Beispiel PIN).

### Fehlerbehandlung

Werden signierte Lizenz und Zufallszahl mehrmals, beispielsweise dreimal hintereinander angefordert, ohne dass anschließend Login-Daten vom Kundensystem an das Sicherungsmodul übertragen werden, muss dies im Sicherungsmodul protokolliert werden. Bei diesem Status darf ausschließlich eine anschließende Verbindung mit der Bescheinigungsstelle zur Fehlerbehebung mit Übertragung des Protokollstatus, nicht jedoch die Herstellung von fälschungssicheren Dokumenten wie Eintrittskarten oder Freimachungsvermerken, möglich sein.

Nach der Authentisierung des Kundensystems/Kunden liest das Sicherungsmodul die aktuelle Identifikationsnummer des Ladevorganges, die vorhergehende Identifikationsnummer, den aktuellen Wertbetrag und die Gültigkeit des Wertes und übergibt sie an das Basissystem. Eine Veränderung dieser Werte darf durch diesen Benutzer (FIPS PUB 140: role) in dieser Nutzungsmöglichkeit Benutzer (FIPS PUB 140: service) nicht bestehen.

## Patentansprüche

1. Sicherungsmodul, das einen Dateneingang enthält, durch den Informationen in das Sicherungsmodul eingegeben werden können und das I wenigstens zwei Datenausgänge (DA1, DA2) enthält, wobei durch einen ersten Datenausgang (DA1) Daten ausgegeben werden können, die an eine Bescheinigungsstelle übertragen werden und wobei durch den zweiten Datenausgang (DA2) Daten ausgegeben werden, die auf ein auszugebendes Dokument übertragen werden können, mit wenigstens zwei Kombinationsmaschinen (K1, K2), wobei die zweite Kombinationsmaschine (K2) einen Ergebniswert für den zweiten Datenausgang (DA2) erzeugt, wobei das Sjcherungsmodul ein Identifikationsregister (ID) und einen Geheimnisgenerator (GG) enthält, der ein nicht vorhersehbares Geheimnis erzeugt, **dadurch gekennzeichnet**, die erste Kombinationsmaschinen(K1) einen Ergebniswert für den ersten Datenausgang (DA1) erzeugt und dass der Geheimnisgenerator mit der ersten Kombinationsmaschine (K1) und der zweiten Kombinationsmaschine (K2) so verbunden ist, dass ein von dem Geheimnisgenerator (GG) erzeugtes Geheimnis in die erste Kombinationsmaschine (K1) und die zweite Kombinationsmaschine (K2) eingeht und wobei ein Ausgangswert des Identifikationsregisters (ID) so mit der ersten Kombinationsmaschine (K1) verbunden ist, dass in eine von der ersten Kombinatiorismaschine (K1) ausgehende Datenkombination ein Wert des Identifikationsregisters eingeht, und dass eine in dem Sicherungsmodul enthaltene Verchlüsselungsmaschine so programmiert ist, dass sie den Ergebnisswert des ersten Kombinationsmachine verschlüsselt.

2. Sicherungsmoduls nach Anspruch 1, **dadurch gekennzeichnet, dass** die Verschlüsselungsmaschine mit einem Schlüsselregister (SR) verbunden ist, wobei wenigstens ein in dem Schlüsselregister (SR) enthaltener Wert in der Verschlüsselungsmaschine zur Verschlüsselung eingesetzt werden kann.

3. Sicherungsmodul nach einem oder mehreren der vorangegangenen Ansprüche, **dadurch gekennzeichnet, dass** es eine Hash Maschine enthält

4. Verfahren zur Erstellung fälschungssicherer Dokumente, wobei Eingangsdaten in einen Dateneingang eines Sicherungsmoduls eingegeben werden und wobei in dem Sicherungsmodul zur Identifizierung einzelner Dokumente dienende Informationen erzeugt werden, wobei die Eingangsdaten in einen Dateneingang eines Sicherungsmoduls eingegeben werden, dort mit ein Geheimnis repräsentierenden Daten in einer zweiten Kombinationsmaschine (K2) kombiniert werden und an einem zweiten Datenausgang (DA2) ausgegeben werden, **dadurch gekennzeichnet, dass** das Geheimnis in einem von dem Kombinieren getrennten Verarbeitungsschritt in einer weiteren Verknüpfung der das Geheimnis repräsentierenden Daten unter Einbeziehung von Daten eines Identifikationsregisters (ID) weiter verarbeitet wird und an einem ersten Datenausgang ausgegeben werden, und dass das Ergebnis der Kombination der Daten, die das Geheimnis repräsentieren und der Daten des Identifikationsregisters (ID) in einer Verschlüsselungsmaschine verschlüsselt wird.

5. Verfahren nach Anspruch 4, **dadurch gekennzeichnet, dass** die das Geheimnis repräsentierenden Daten und die Eingangsdaten irreversibel miteinander verknüpft werden, wobei die irreversible Verknüpfung so erfolgt, dass ausschliesslich bei wiederholter Verknüpfung derselben Daten in derselben Weise ein identisches Ergebnis entsteht ohne dass Rückschlüsse auf das temporäre Geheimnismöglich sind.

6. Verfahren nach Anspruch 4, **dadurch gekennzeichnet, dass** die Verschlüsselung unter Einbeziehung eines Schlüssels erfolgt, dessen Wert in einem Schlüsselregister (SR) gespeichert ist.

7. Verfahren nach einem oder mehreren der Ansprüche 4 bis 6, **dadurch gekennzeichnet, dass** die Daten, die aus dem ersten Datenausgang ausgegeben werden, an eine Bescheinigungsstelle übertragen werden.

8. Verfahren nach Anspruch 7, **dadurch gekennzeichnet, dass** die Bescheinigungsstelle die Daten mit einem weiteren Schlüssel verknüpft.

9. Verfahren nach einem oder mehreren der Ansprüche 4 bis 8, **dadurch gekennzeichnet, dass** die Daten, die aus dem zweiten Datenausgang (DA2) ausgegeben werden als fälschungssichere Informationen auf die zu erstellenden fälschungssicheren Dokumente ausgegeben werden.

## Claims

1. A security module comprising a data input port through which information can be entered into the security module and comprising at least two data output ports (DA1, DA2), whereby data can be output via a first data output port (DA1) and is then transferred to an authentication unit and whereby data can be output via the second data output port (DA2) and can then be transferred to a document that is to be issued, said module encompassing at least two combination machines (K1, K2), whereby the second combination machine (K2) generates a result value for the second data output port (DA2), whereby the security module comprises an identification register (ID) and a secret generator (GG) that generates an unpredictable secret, **characterized in that** the first combination machine (K1) generates a result value for the first data output port (DA1) and **in that** the secret generator is connected to the first combination machine (K1) and to the second combination machine (K2) in such a way that a secret generated by the secret generator (GG) is incorporated into the first combination machine (K1) and into the second combination machine (K2), and whereby an output value of the identification register (ID) is connected to the first combination machine (K1) in such a way that a value of the identification register is incorporated into a data combination coming from the first combination machine (K1), and **in that** an encryption machine contained in the security module is programmed in such a way that it encrypts the result value of the first combination machine.

2. The security module according to claim 1, **characterized in that** the encryption machine is connected to a key register (SR), whereby at least one value contained in the key register (SR) can be employed in the encryption machine for encryption purposes.

3. The security module according to one or more of the preceding claims, **characterized in that** it contains a hash machine.

4. A method for the production of forgery-proof documents, whereby input data is entered into a data input port of a security module and whereby information that serves to identify individual documents is generated in the security module, whereby the input data is entered into a data input port of a security module, where said input data is combined with data representing a secret in a second combination machine (K2) and then output at a second data output port (DA2), **characterized in that**, in a processing step that is separate from the combination procedure, the secret is further processed, utilizing data of an identification register (ID), in a further linking of the data representing the secret, and then output at a first data output port, and **in that** the result of the combination of the data representing the secret and the data of the identification register (ID) is encrypted in an encryption machine.

5. The method according to claim 4, **characterized in that** the data representing the secret and the input data are irreversibly linked to each other, whereby the irreversible linking is carried out in such a way that an identical result is exclusively obtained from a repeated linking of the same data in the same manner, without the possibility that any conclusions can be drawn about the temporary secret.

6. The method according to claim 4, **characterized in that** the encryption takes place utilizing a key whose value is stored in a key register (SR).

7. The method according to one or more of claims 4 to 6, **characterized in that** the data that is output from the first data output port is transmitted to an authentication unit.

8. The method according to claim 7, **characterized in that** the authentication unit links the data to another key.

9. The method according to one or more of claims 4 to 8, **characterized in that** the data that is output from the second data output port (DA2) is output as forgery-proof information on the forgery-proof document that is to be produced.

## Revendications

1. Module de sécurisation contenant une entrée de données par laquelle des informations peuvent être introduites dans le module de sécurisation et contenant au moins deux sorties de données (DA1, DA2), des données pouvant être émises par une première sortie de données (DA1), lesquelles sont transmises à un poste de certification, et des données pouvant être émises par la deuxième sortie de données (DA2), lesquelles peuvent être transmises à un document à émettre, comportant au moins deux machines de combinaison (K1, K2), la deuxième machine de combinaison (K2) générant une valeur de résultat pour la deuxième sortie de données (DA2), le module de sécurisation contenant un registre d'identification (ID) et un générateur de secret (GG) qui génère un secret non prévisible, **caractérisé en ce que** la première machine de combinaison (K1) génère une valeur de résultat pour la première sortie de données (DA1) et **en ce que** le générateur de secret est relié à la première machine de combinaison (K1) et à la deuxième machine de combinaison (K2) de telle sorte qu'un secret généré par le générateur de secret (GG) entre dans la première machine de combinaison (K1) et la deuxième machine de combinaison (K2), et une valeur de sortie du registre d'identification (ID) étant reliée de manière telle à la première machine de combinaison (K1) qu'une valeur du registre d'identification entre dans une combinaison de données émise par la première machine de combinaison (K1), et **en ce qu'**une machine de cryptage contenue dans le module de sécurisation est programmée de manière à crypter la valeur de résultat de la première machine de combinaison.

2. Module de sécurisation selon la revendication 1, **caractérisé en ce que** la machine de cryptage est reliée à un registre de clés (SR), au moins une valeur contenue dans le registre de clés (SR) pouvant être utilisée pour le cryptage dans la machine de cryptage.

3. Module de sécurisation selon une ou plusieurs des revendications précédentes, **caractérisé en ce qu'**il contient une machine de hachage.

4. Procédé de création de documents infalsifiables, des données d'entrée étant introduites dans une entrée de données d'un module de sécurisation et des informations servant à identifier des documents distincts étant générées dans le module de sécurisation, les données d'entrée étant introduites dans une entrée de données d'un module de sécurisation, y étant combinées avec des données représentant un secret dans une deuxième machine de combinaison (K2) et étant émises à une deuxième sortie de données (DA2), **caractérisé en ce que** le secret est encore traité, dans une étape de traitement séparée de la combinaison, dans une autre association des données représentant le secret compte tenu de données d'un registre d'identification (ID) et est émis à une première sortie de données, et **en ce que** le résultat de la combinaison des données qui représentent le secret et des données du registre d'identification (ID) est crypté dans une machine de cryptage.

5. Procédé selon la revendication 4, **caractérisé en ce que** les données représentant le secret et les données d'entrée sont associées entre elles de manière irréversible, l'association irréversible étant opérée de telle sorte qu'on obtient un résultat identique uniquement en cas d'association répétée des mêmes données et de la même manière, sans possibilité de déduction quant au secret temporaire.

6. Procédé selon la revendication 4, **caractérisé en ce que** le cryptage a lieu compte tenu d'une clé dont la valeur est stockée dans un registre de clés (SR).

7. Procédé selon l'une ou plusieurs des revendications 4 à 6, **caractérisé en ce que** les données émises à la première sortie de données sont transmises à un poste de certification.

8. Procédé selon la revendication 7, **caractérisé en ce que** le service de certification associe les données avec une autre clé.

9. Procédé selon l'une ou plusieurs des revendications 4 à 8, **caractérisé en ce que** les données émises à la deuxième sortie de données (DA2) sont émises en tant qu'informations infalsifiables sur les documents infalsifiables à créer.
